# EUROPEAN PATENT SPECIFICATION

(11) **EP 1 496 317 B1**
(45) Date of publication and mention of the grant of the patent: **24.11.2010**
(21) Application number: 03745400.6
(22) Date of filing: 03.02.2003
(51) Int. Cl.: F24F 11/02, F25B 1/00

(54) **AIR CONDITIONER**
KLIMAANLAGE
CLIMATISEUR

(30) Priority: 29.03.2002 JP 2002096865
(43) Date of publication of application: 12.01.2005
(73) Proprietor: DAIKIN INDUSTRIES, LTD., Osaka-shi, Osaka 530-8323 (JP)
(72) Inventor: KATAOKA, Hidehiko, c/o SHIGA PLANT DAIKIN IND. LTD, Kusatsu-shi, Shiga 525-0044 (JP); SANGENYA, Hideki, c/o SHIGA PLANT DAIKIN IND. LTD, Kusatsu-shi, Shiga 525-0044 (JP)
(74) Representative: HOFFMANN EITLE
(86) International application number: PCT/JP2003/001088
(87) International publication number: WO 2003/083376

(56) References cited:
- EP-A2- 0 355 180
- JP-A- 2001 141 285
- JP-A- 2002 039 598
- US-A- 4 951 475

## Description

### Technical Field

The present invention relates to an air conditioner, and more particularly to an air conditioner equipped with a differential pressure adjustment device for holding the high/low pressure difference between a high pressure zone and a low pressure zone in a compressor at a predetermined value or higher, in an air cooling operation at low outside temperature.

### Background Art

In recent years, because of higher intensity of lighting in lighting fixtures, increased use of electronic equipment and the like, air cooling has become necessary even at low outside air temperature. For this reason, a range of outside air temperatures at which an air cooling operation can be performed, which is required of the air conditioner, tends to expand toward lower temperatures. On the other hand, as a general characteristic of the air conditioner, as the outside air temperature becomes lower, the high/low pressure difference during the air cooling operation becomes smaller. However, it is required that the high/low pressure difference of the compressor be held at a predetermined value or higher for the following reason. First, as for the first reason, the compressor has a lubricating mechanism for generally supplying lubricating oil to a sliding portion by taking advantage of the high/low pressure difference, and in order to supply a predetermined amount of refrigerator oil to each sliding portion, it is necessary to hold a predetermined high/low pressure difference. Also, as for the second reason, when the high/low pressure difference of the compressor becomes smaller, it becomes difficult to secure a predetermined refrigerant circulation amount, that is, predetermined air cooling capacity. In this respect, if an expansion device, such as an electric expansion valve, for refrigerant control is made into a large-diameter type corresponding to the high/low pressure difference becoming smaller, it will be also possible for the air conditioner to secure the predetermined refrigerant circulation amount. In this case, however, there is a problem in that it is required that both a large-diameter expansion device for low outside air temperature and a small-diameter expansion device for high outside air temperature be used, leading to an increase in the cost of the air conditioner.

A conventional air conditioner for solving such a problem, shows the features of the preamble of claim 1 and is described in Japanese Laid-Open Patent Publication No. 2002-39598. When during an air cooling operation at predetermined outside air temperature or less, the high/low pressure difference of the compressor decreases to a predetermined value, and this differential pressure adjustment device first moves the refrigerant within the refrigerant amount adjustment tank to an outdoor heat exchanger, whereby the heat dissipation capacity of the outdoor heat exchanger is caused to decrease to perform differential pressure adjustment for preventing the high/low pressure difference from decreasing. Thus, if decrease of the high/low pressure difference still could not be prevented even by such differential pressure adjustment due to the adjustment of the refrigerant amount, the rotation speed of an outdoor fan is reduced, whereby further the differential pressure adjustment for preventing the high/low pressure difference from decreasing is performed.

In the case of the above-described differential pressure adjustment device, however, a refrigerant tank and a plurality of electromagnetic on-off valves become necessary, and in addition, a refrigerant circuit, refrigerant circuit equipment necessary for refrigerant control and control equipment are high in cost, and in an aspect of reducing the cost, room for improvement has still remained.

The present invention has been achieved in order to solve such problems in the prior art, and is intended to provide an air conditioner equipped with a low-priced differential pressure adjustment device for holding the high/low pressure difference of a compressor, at a predetermined value or higher, in an air cooling operation at low outside air temperature.

### Disclosure of the Invention

An air conditioner according to the present invention has the features of claim 1.

By means of both control of the rotation speed of the outdoor fan and control of the operation frequency of the compressor to be inverter-driven, it is possible to hold the high/low pressure difference of the compressor, at a predetermined value or higher, in an air cooling operation at low outside air temperature. Therefore, according to the present invention, since the refrigerant circuit equipment and control equipment necessary for control of refrigerant amount, which has been a factor for increasing conventional costs, are not required, it is possible to provide an air conditioner equipped with a low cost differential pressure adjustment device.

Embodiments of the invention are named in the dependent claims.

Also, the first differential pressure adjustment device has preferably been a device for regulating a lower limit of the fan rotation speed for holding the rotation speed of the outdoor fan at a lower limit rotation speed for an allowable operation range or higher. When a DC motor is used for the outdoor fan motor, the lower limit rotation speed of the allowable operation range is determined in terms of protection of electronic parts of the fan drive circuit and reliability of control of the fan rotation speed. Therefore, when the structure is arranged as described above, it is possible to protect the electronic parts of the fan drive circuit and to reliably control the rotation speed of the outdoor fan.

The first differential pressure adjustment device may distinguish, every time a predetermined time period elapses, which of predetermined zones an outdoor heat exchange temperature is in, and which of the zones the outdoor heat exchange temperature was previously in. On the basis of this distinguishment result, the first differential pressure adjustment device determines whether or not the high/low pressure difference of the compressor can be held at the predetermined value or higher. When it is determined that it may not be held, the first differential pressure adjustment device decreases an upper limit operation rotation speed of the outdoor fan by a predetermined rotation speed. When the structure is arranged as described above, by determining by a simple method whether or not the high/low pressure difference can be held, the rotation speed of the outdoor fan can be controlled.

In the differential pressure control due to this first differential pressure adjustment device, the above-described zones of the outdoor heat exchange temperatures are preferably set to predetermined values corresponding to a change in indoor heat exchange temperature. It can be determined whether or not the high/low pressure difference can be held more exactly than in this case.

Also, in the differential pressure control due to this first differential pressure adjustment device, the above-described outdoor heat exchange temperature can be a temperature to be detected by an outdoor heat exchange temperature detector for detecting intermediate temperature of the outdoor heat exchanger, and further, the indoor heat exchange temperature can be a temperature to be detected by an indoor heat exchange temperature detector for detecting temperature of the indoor heat exchanger. If the structure is arranged as described above, outdoor heat exchange temperature corresponding to the high pressure and temperature at the indoor heat exchanger can be detected by an ordinary temperature detector.

In this respect, as regards the upper limit operation rotation speed of the outdoor fan, if in the high/low pressure difference control in the first differential pressure adjustment device, an initial preset value is determined corresponding to the outside air temperature, rise time up to stable operation will be able to be shortened.

Also, the second differential pressure adjustment device preferably has a device for regulating the upper limit of the compressor operation frequency for holding the operation frequency of the compressor at an upper limit frequency or less of the allowable operation range. In the case of a compressor to be invertor-driven, it is required that the operation frequency be set to a fixed value or higher for protection of electronic parts constituting the inverter circuit and for mechanical reasons. Therefore, the above-described structure is arranged, whereby it is possible to protect electronic parts constituting the inverter circuit, and to prevent mechanical damage to the compressor.

Also, the second differential pressure adjustment device may distinguish, every time a predetermined time period elapses, which of predetermined zones an outdoor heat exchange temperature is in, and which of the zones the outdoor heat exchange temperature was previously in. On the basis of this distinguishment result, the second differential pressure adjustment device determines whether or not the high/low pressure difference of the compressor can be held at the predetermined value or higher. When it is determined that it may not be held, the second differential pressure adjustment device raises a lower limit operation frequency of the compressor by a predetermined frequency. When the structure is arranged as described above, by determining by a simple method whether or not the high/low pressure difference can be held, it is determined whether or not it is necessary to increase the operation frequency of the compressor, and the operation frequency of the compressor can be controlled.

In the differential pressure control due to this second differential pressure adjustment device, the above-described zones of outdoor heat exchange temperatures are preferably set to predetermined values corresponding to changes in the indoor heat exchange temperature. It can be determined whether or not the high/low pressure difference can be held more accurately than in this case.

Also, in the differential pressure control due to this second differential pressure adjustment device, the above-described outdoor heat exchange temperature can be a temperature to be detected by an outdoor heat exchange temperature detector for detecting an intermediate temperature of an outdoor heat exchanger, and further, the above-described indoor heat exchange temperature can be a temperature to be detected by an indoor heat exchange temperature detector for detecting temperature of the indoor heat exchanger. If the structure is arranged as described above, the outdoor heat exchange temperature corresponding to high pressure and temperature of the indoor heat exchanger can be detected by an ordinary temperature detector.

Also, in the air conditioner, a control board, in which electronic parts as control equipment for controlling operation of the air conditioner have been housed, can be provided with a radiating fin for dissipating heat to be generated by the electronic parts within the control board, and the control board can be provided with a first electrical equipment protection device for increasing the rotation speed of the outdoor fan in preference to the first differential pressure adjustment device in such a manner that temperature of the radiating fin becomes a predetermined value or less.

In the air conditioner, in order to cool the electronic parts such as a driver for driving the outdoor fan, outside air is usually supplied around the electronic parts by taking advantage of a blowing operation of the outside fan. Therefore, when the rotation speed of the outdoor fan has been reduced, this may possibly deteriorate the cooling operation of the electronic parts. If, however, the rotation speed of the outside fan is restricted in terms of protection of the electronic parts as.described above, it will be possible to reliably supply a minimum amount of outside air for cooling, necessary for cooling of the electronic parts to the radiating fin, and to prevent the electronic parts from burning.

Also, in the air conditioner, in a control board, in which electronic parts as control equipment for controlling an operation of the air conditioner have been housed, there are provided a radiating fin for dissipating heat to be generated within the control board, and the control board can be provided with a second electrical equipment protection device for reducing the operation frequency of the compressor in preference to the second differential pressure adjustment device in such a manner that temperature of the radiating fin becomes a predetermined value or less. In the air conditioner, outside air is usually supplied around the electronic parts by taking advantage of a blowing operation of the outside fan as described above. Therefore, when the rotation speed of the outdoor fan has been reduced, this may possibly deteriorate the cooling operation of the electronic parts. If, however, when the temperature of the radiating fin of the electronic parts has been raised as described above, heat generated from the electronic parts is restricted by reducing the operation frequency of the compressor, it will be possible to reliably dissipate heat generated from the electronic parts, and to prevent the electronic parts from burning, among other problems.

### Brief Description of the Drawings

Figure 1 shows a refrigerant circuit of an air conditioner according to an embodiment of the present invention;
Figure 2 is a schematic block diagram showing a control board for the same air conditioner;
Figure 3 is a flow chart for high/low pressure difference control for a first differential pressure adjustment device according to the embodiment of the present invention;
Figure 4 is a flow chart for high/low pressure difference control for the first differential pressure adjustment device;
Figure 5 is a flow chart for high/low pressure difference control for the first differential pressure adjustment device;
Figure 6 is a graph showing preset values of an upper limit operation number for the rotation speed of an outdoor fan in the first differential pressure adjustment device;
Figure 7 is a view showing zones of outdoor heat exchange temperatures in the high/low pressure difference control for the first differential pressure adjustment device;
Figure 8 is a chart for setting a temperature that becomes a reference for the outdoor heat exchange temperature in Figure 7;
Figure 9 is a flow chart for the high/low pressure difference control for a second differential pressure adjustment device according to the embodiment of the present invention;
Figure 10 is a flow chart for the high/low pressure difference control for the second differential pressure adjustment device;
Figure 11 is a flow chart for the high/low pressure difference control for the second differential pressure adjustment device;
Figure 12 is a view showing zones of outdoor heat exchange temperatures in the high/low pressure difference control for the second differential pressure adjustment device;
Figure 13 is a flow chart showing control of the amount of heat dissipation by a second electrical equipment protection device according to an embodiment of the present invention;
Figure 14 is a flow chart showing control of the amount of heat dissipation by the second electrical equipment protection device; and
Figure 15 is a view showing zones of temperatures for radiating fins for control of the amount of heat dissipation by the second electrical equipment protection device.

### Best Mode for Carrying Out the Invention

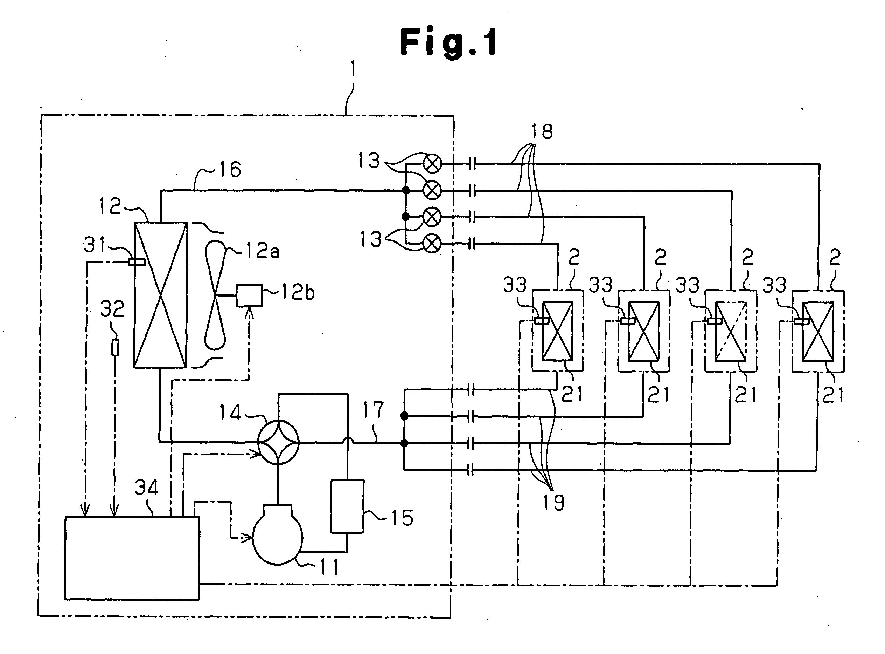

An air conditioner according to the present embodiment is constructed as a heat pump type heating and cooling device in which four indoor units 2 have been connected to one outdoor unit 1 as shown in Figure 1.

The outdoor unit 1 has: an inverter-driven compressor 11; an outdoor heat exchanger 12; an outdoor fan 12a; a motor 12b for the outdoor fan consisting of a DC motor constructed to be variable in the rotation speed; four expansion devices 13 for each indoor unit; a 4-way change-over valve 14; an accumulator 15; a liquid pipe 16; a gas pipe 17 and the like which have been housed therein. The outdoor heat exchanger 12 is connected to the compressor 11 via the 4-way change-over valve 14. The accumulator 15 is connected between the 4-way change-over valve 14 and an intake port of the compressor 11. An indoor unit connected side in the liquid pipe 16 is branched to four pipes. An indoor unit connected side in the gas pipe 17 is branched to four pipes. The expansion device 13 is an electric expansion valve to be used for both heating and cooling, and is provided for the branch pipes of the liquid pipe 16, respectively.

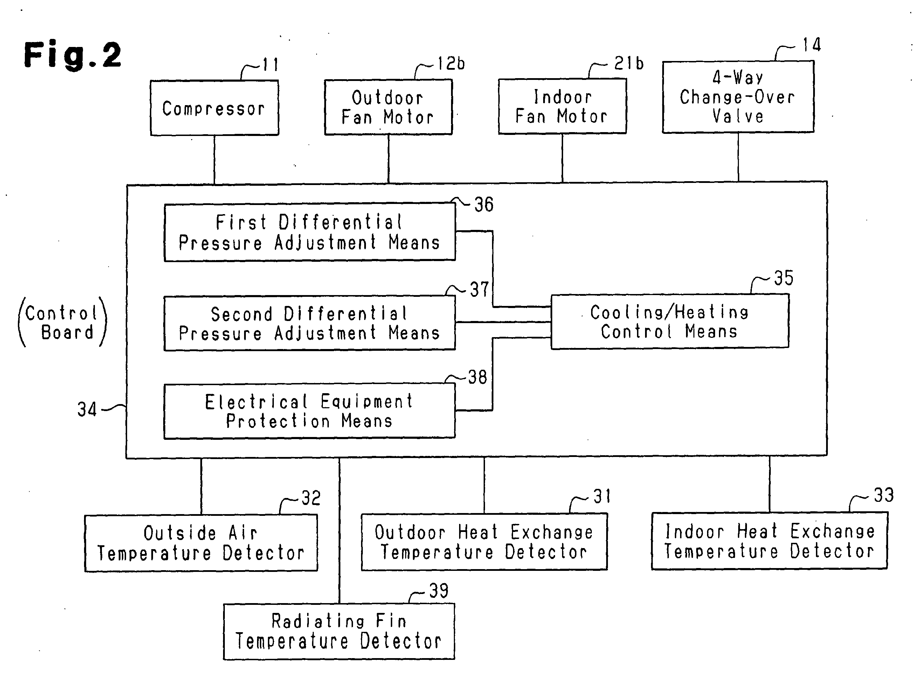

The indoor unit 2 has: an indoor heat exchanger 21; an indoor fan (not shown) and a motor 21b (See Figure 2) for the indoor fan which has been housed therein. Thus, the indoor heat exchanger 21 to be housed within each indoor unit 2 is connected in parallel between a branch pipe of the liquid pipe 16 of the outdoor unit 1 and a branch pipe of the gas pipe 17 through the liquid-side connection piping 18 and the gas-side connection piping 19.

Also, the outdoor unit 1 is provided with an outdoor heat exchange temperature detector 31 for an detecting intermediate temperature (that is, a condensation temperature) of the outdoor heat exchanger 12 and an outside air temperature detector 32 for detecting outside air temperature of the outdoor heat exchanger 12 on the outside air inlet side. On the other hand, the indoor heat exchanger 21 is provided with an indoor heat exchange temperature detector 33 for detecting another temperature (that is, an evaporation temperature) of the indoor heat exchanger 21.

Also, the control board 34 in which there have been housed electronic parts as control equipment for controlling operation of this air conditioner is provided within the outdoor unit 1. In this respect, the control board 34 has been provided with radiating fins for dissipating heat generated by the electronic parts housed in an appropriate form, although not shown.

The control board 34 has: as shown in a schematic block diagram of Figure 2, a cooling and heating control device 35 for controlling cooling and heating operation of the air conditioner; the first differential pressure adjustment device 36 and the second differential pressure adjustment device 37 for holding the high/low pressure difference for the compressor 11 during cooling operation at low outside air temperature at a predetermined value or higher; the electrical equipment protection device 38 for holding the temperature of the radiating fins of the control board 34 at a predetermined temperature or less, and the like. Also, this control board 34 is connected to the outdoor heat exchange temperature detector 31, the outside air temperature detector 32, the indoor heat exchange temperature detector 33, and the radiating fin temperature detector 39 for detecting temperature of the radiating fins of the control board 34, and is constructed so as to be able to receive outside air temperature information, outdoor heat exchange temperature information, indoor heat exchange temperature information and radiating fin temperature information from these temperature detectors. Also, the control board 34 is connected to the compressor 11, the motor 12b for the outdoor fan, the motor 21b for the indoor fan, and the 4-way change-over valve 14, and is constructed so as to control this equipment.

The control board 34 has the above-described structure, and performs control of the cooling and heating operation, and differential pressure control adjustment for holding the high/low pressure difference of the compressor 11 at low outside air temperature at a predetermined value or higher.

The air conditioner constructed as described above performs the following cooling and heating operation under the control of the cooling and heating control device 35 of the control board 34.

During the cooling operation, the 4-way change-over valve 14 is changed over to a connected state indicated by a broken line in Figure 1 to circulate refrigerant. In other words, high-pressure gas refrigerant discharged from the compressor 11 is sent to the outdoor heat exchanger 12 via the 4-way change-over valve. The high-pressure gas refrigerant sent to the outdoor heat exchanger 12 is cooled by heat-exchange with the outside air to become liquid refrigerant. This liquid refrigerant is pressure-reduced in the expansion device 13 connected to a branch pipe of the liquid pipe 16, and becomes liquid gas two phase flow at low pressure to be supplied to each indoor unit 2 via the liquid-side connecting piping 18. The low-pressure refrigerant supplied to the indoor unit 2 cools the indoor air by heat-exchange with the indoor air, and the refrigerant itself vaporizes to become low-pressure gas refrigerant. This low-pressure gas refrigerant is sent back to the outdoor unit 1 via the gas-side connecting piping 19. The low-pressure gas refrigerant sent back to the outdoor unit 1 is returned to the compressor 11 via the 4-way change-over valve 14 and the accumulator 15. Cooling is performed by the above-described cycle.

During the heating operation, the 4-way change-over valve 14 is changed over to a connected state indicated by a solid line in Figure 1 to circulate refrigerant. In other words, high-pressure gas refrigerant discharged from the compressor 11 is sent to the indoor unit 2 via the 4-way change-over valve 14. The high-pressure gas refrigerant sent to the indoor unit 2 heats the indoor air by heat-exchange with the indoor air by the indoor heat exchanger 21, and the refrigerant itself is cooled into liquid refrigerant. This liquid refrigerant is sent to the outdoor unit 1 via the liquid-side connection piping 18. The liquid refrigerant at high pressure sent to the outdoor unit 1 is pressure-reduced in each expansion device 13 connected to a branch pipe of the liquid pipe 16, and becomes a liquid gas two phase flow at low pressure to be sent to the outdoor heat exchanger 12. The low-pressure refrigerant sent to the outdoor heat exchanger 12 takes heat from the outside air by heat-exchange with the outside air and the refrigerant itself vaporizes into low-pressure gas refrigerant. This low-pressure gas refrigerant is returned to the compressor 11 via the 4-way change-over valve 14 and the accumulator 15. Heating is performed by the above-described cycle.

In this respect, in the above-described cooling operation and heating operation, the compressor 11 is controlled such that the operation rotation speed increases and decreases by the operation frequency of the compressor 11 being increased and decreased corresponding to a cooling or heating load (for example, corresponding to the number of the indoor units 2 operating and the indoor temperature).

Next, a description will be provided of the cooling operation at low outside air temperature.

The air conditioner according to the present embodiment adjusts the high/low pressure difference of the compressor 11 at a predetermined value or higher during the cooling operation at low outside air temperature by the control of the first differential pressure adjustment device 36 and the second differential pressure adjustment device 37.

When the high/low pressure difference of the compressor 11 decreases to a predetermined value, the first differential pressure adjustment device 36 adjusts to prevent the high/low pressure difference from decreasing by reducing an upper limit operation rotation speed RMAX of the outdoor fan 12a. For this reason, by observing each time a predetermined time period elapses, which of predetermined zones (return zone, up zone, non-change zone and hang down zone) an outdoor heat exchange temperature is in, and which of the zones the outdoor heat exchange temperature was previously in, the upper limit operation rotation speed RMAX of the outdoor fan 12a will be set. Thus, an actual rotation speed of the outdoor fan 12a is controlled so as to be regulated by this upper limit operation rotation speed RMAX is thus set. In this respect, the zones of outdoor heat exchange temperatures have been set to predetermined values obtained experimentally in advance such that the above-described determination can be applied.

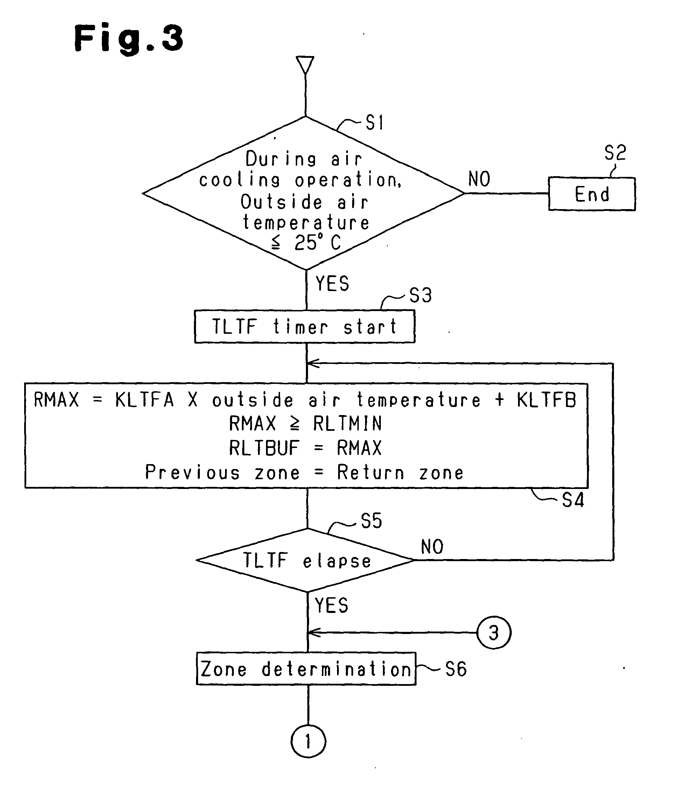

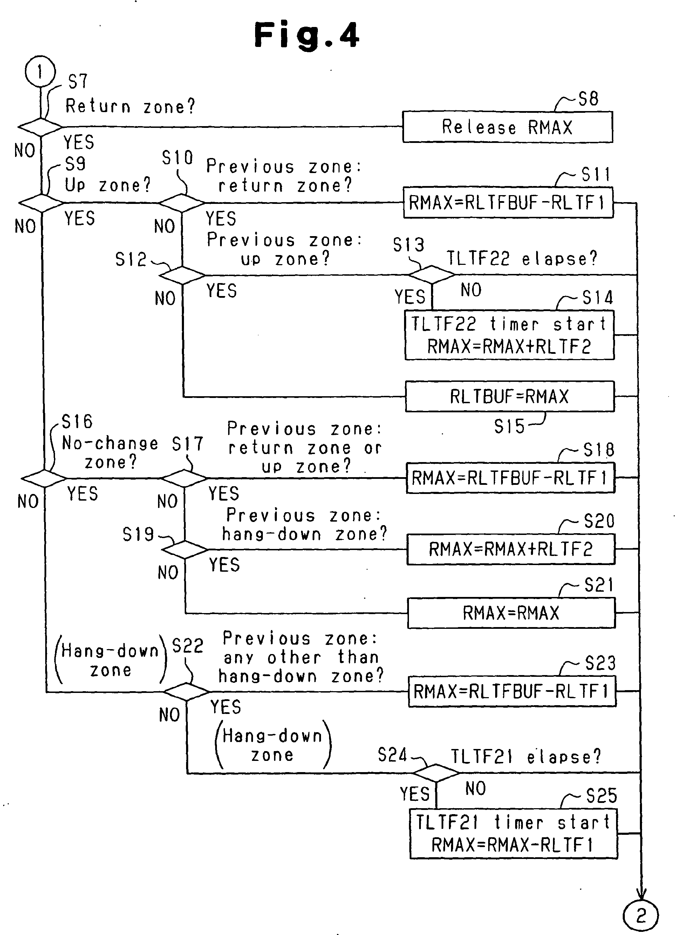

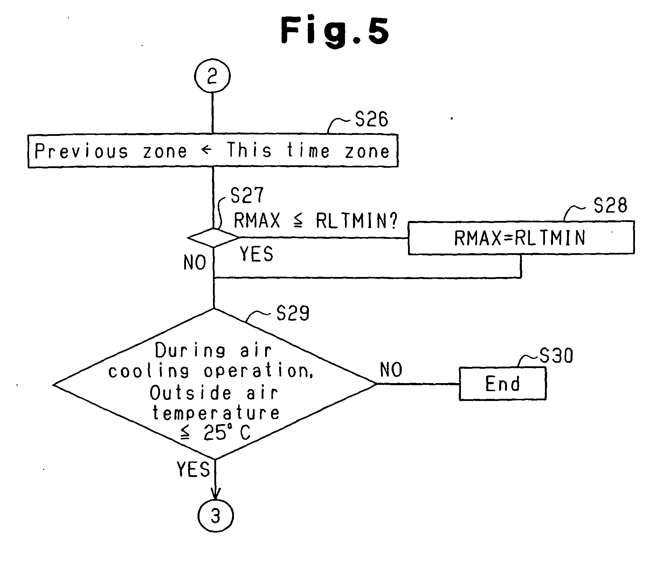

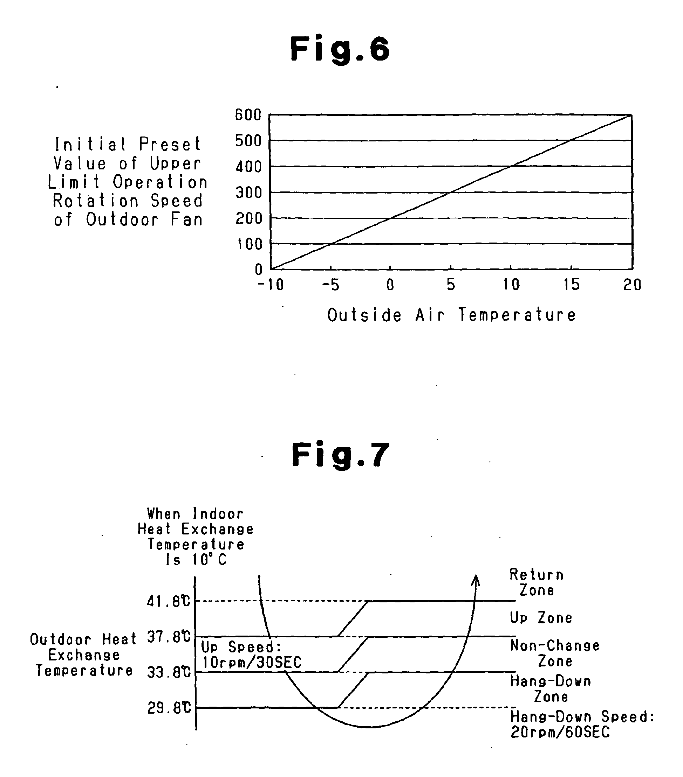

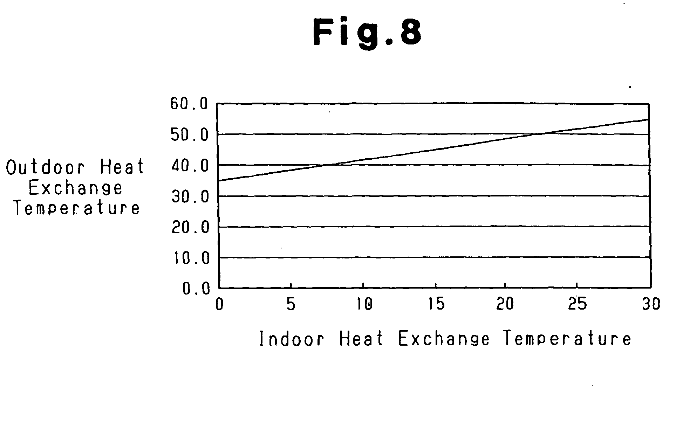

Hereinafter, with reference to the flow chart shown in Figures 3 to 5, description will be provided for control of the high/low pressure difference (in the following description, "differential pressure control" means "control of the high/low pressure difference") by this first differential pressure adjustment device 36. Also, in the description based on this flow chart, Figures 6 to 8 will be used together for auxiliary descriptive views. In this respect, Figure 6 is a graph showing preset values for the upper limit operation rotation speed RMAX of an outdoor fan 12a in the differential pressure control by the first differential pressure adjustment device 36, Figure 7 is a view showing zones of outdoor heat exchange temperatures in the differential pressure control by the first differential pressure adjustment device 36, and Figure 8 is a chart for setting temperature that becomes a reference for the outdoor heat exchange temperature in Figure 7.

The differential pressure control by the first differential pressure adjustment device 36 is performed when the outside air temperature is 25°C or less (Step S1, S2). When the outside air temperature becomes 25°C or less, a timer TLTF is started for the stability of the control (Step S3), initialization is performed (Step S4), and after a lapse of a predetermined time period (Step S5), it is determined in which zone the outdoor heat exchange temperature is located (Step S6). In this initialization (Step S4), an initialization value for the upper limit operation rotation speed RMAX of the outdoor fan 12a is stored in a buffer RLTBUF. Further, in this initialization (Step S4), a return zone is stored as a zone during the previous determination (hereinafter, referred to as previous zone). Also, the initialization value of the upper limit operation rotation speed RMAX is determined corresponding to the outside air temperature in Figure 6. In this respect, KLTFA and KLTFB in the expression of RMAX in Step S4 are coefficients determined on the basis of the experimental data.

The upper limit operation rotation speed RMAX of the outdoor fan 12a during an operation is determined by in which of the zones determined in Figure 7 the outdoor heat exchange temperature is located, and in which zone it had been located before it is located in that zone. The zone view for the outdoor heat exchange temperature of Figure 7 is to be set so as to enable such determination as described above, and is prepared by regarding the outdoor heat exchange temperature to be obtained from the indoor heat exchange temperature on the basis of Figure 8 as the most significant temperature, and with temperature width of each zone being a constant temperature (4°C in this case). As described above, the zones view for the outdoor heat exchange temperature of Figure 7 are set to predetermined values corresponding to changes in the indoor heat exchange temperature. In this respect, Figure 7 shows a zone view as an example when the indoor heat exchange temperature is 10°C.

Determination as to, in which zone the outdoor heat exchange temperature is located is performed in Steps S7, S9 and S16.

When the outdoor heat exchange temperature has been determined to be located in a return zone in Step S7, the outdoor heat exchange temperature is high, in other words, it is determined that the high pressure is high and the high/low pressure difference of the compressor 11 is sufficient, and the upper limit operation rotation speed RMAX stored in the buffer RLTBUF is released (Step S8).

When the outdoor heat exchange temperature has been determined in Step S9 to be the up zone, the previous zone is determined (Step S10, S12). Determining the previous zone enables contrast of the previous zone with the present outdoor heat exchange temperature zone, and means to enable to determining whether the outdoor heat exchange temperature is decreasing, rising or stable. Thus, in response to this determination, the upper limit operation rotation speed RMAX stored in the buffer RLTBUF is controlled to be rewritten.

When the previous zone is the return zone (YES in Step S10), it can be seen that it is decreasing, although the outdoor heat exchange temperature is high and the high/low pressure difference exceeds a predetermined level. For this reason, as edge processing implying that temperature drop is prevented as a preliminary step, the upper limit operation rotation speed RMAX is reduced by a fixed rotation speed RLTF1 (for example, 10 rpm) (Step S11).

When the previous zone is the up zone (YES in Step S12), since it is determined that the outdoor heat exchange temperature is high, the high/low pressure difference exceeds a predetermined level, and yet does not decrease, a timer TLTF22 is started. Thus, during a predetermined time period before the time for the timer TLTF22 is up, the upper limit operation rotation speed RMAX stored in the buffer RLTBUF is raised by a fixed rotation speed RLTF2 (10 rpm) each time a fixed time period elapses (30 seconds in this example) to rewrite (Step S13, S14).

When the previous zone is neither the up zone nor the return zone, specifically when it is the no-change zone (NO in Step S12), since the outdoor heat exchange temperature is in a high state, the upper limit operation rotation speed RMAX stored in the buffer RLTBUF is maintained as it is (Step S15).

Next, when the outdoor heat exchange temperature has been determined in Step S16 to be the no-change zone, the previous zone is determined as in the case of the above-described one (Step S17, S19). Also, the previous zone is determined, whereby control is performed such that a change in the outdoor heat exchange temperature, that is, a change in the high/low pressure difference is read and the upper limit operation rotation speed RMAX stored in the buffer RLTBUF is re-written.

In other words, when the previous zone is either the return zone or the up zone (specifically, the up zone, YES in Step S17), it can be seen that the outdoor heat exchange temperature is still decreasing although it is at a predetermined level or height. For this reason, as edge processing implying that temperature drop is prevented as a preliminary step, the upper limit operation rotation speed RMAX stored in the buffer RLTBUF is reduced by a fixed rotation speed RLTF1 (for example, 10 rpm) (Step S18).

Also, when the previous zone is the hang-down zone (YES in Step S19), since it is determined that the outdoor heat exchange temperature has been raised to a predetermined level from a lower level, as the edge processing, the upper limit operation rotation speed RMAX is raised by a fixed rotation speed RLTF2 (for example, 10 rpm)(Step S20).

Also, when the previous zone is neither the return zone, nor the up zone, not the hang-down zone (NO in Step S19), since the outdoor heat exchange temperature is in a state in which the predetermined level has been held, the upper limit operation rotation speed RMAX stored in the buffer RLTBUF is continued as it is (Step S21).

Next, when determined to be NO in Step S16, that is, when the outdoor heat exchange temperature has been determined to be the hang-down zone, the previous zone is determined as in the case of the above-described one (Step S22). Also, the previous zone is determined, whereby control is performed such that a change in the outdoor heat exchange temperature, that is, a change in the high/low pressure difference is read and the upper limit operation rotation speed RMAX stored in the buffer RLTBUF is re-written.

In other words, when the previous zone is any other than the hang-down zone, specifically when it is the non-change zone (YES in Step S22), since it is determined that the outdoor heat exchange temperature has entered a state lower than the predetermined level, as edge processing implying that temperature drop is prevented, the upper limit operation rotation speed RMAX stored in the buffer RLTBUF is reduced by a fixed rotation speed RLTF1 (for example, 10 rpm) (Step S23).

Also, when the previous zone is the hang-down zone (NO in Step S22), since the outdoor heat exchange temperature has continued to be in a state lower than the predetermined level, in other words, the high/low pressure difference is considered to be in a lower state than the predetermined level. Thus, a timer TLTF21 is started, and during a predetermined time period before the time is up, the upper limit operation rotation speed RMAX stored in the buffer RLTBUF is reduced by a fixed rotation speed RLTF1 (for example, 10 rpm) every time a fixed time period elapses(60 seconds in this example) (Step S24, S25).

In the next Step S26, in which such processing as described above has been completed, processing in which contents stored as the previous zone in Step S4 are rewritten in a zone determined this time will be performed (Step S26). Thus, it is determined whether the upper limit operation rotation speed RMAX re-set this time is the minimum rotary speed (lower limit rotation speed) RLTMIN to be allowed for the outdoor fan 12a or less (Step S27), and if affirmative, the upper limit operation rotation speed RMAX re-set this time will be replaced with the lower limit rotation speed RLTMIN (Step S28). Further, when the outside air temperature is 25°C or less (Step S29), the sequence will return to Step S6.

The first differential pressure adjustment device 36 is a device for controlling the rotary speed of the outdoor fan 12a by changing the preset value of the upper limit operation rotation speed RMAX of the outdoor fan 12a in order to prevent the high/low pressure difference of the compressor 11 from decreasing as described above. Also, the processing by the Steps S27 and S28 constitutes the device for regulating a lower limit of the fan rotation speed according to the present invention.

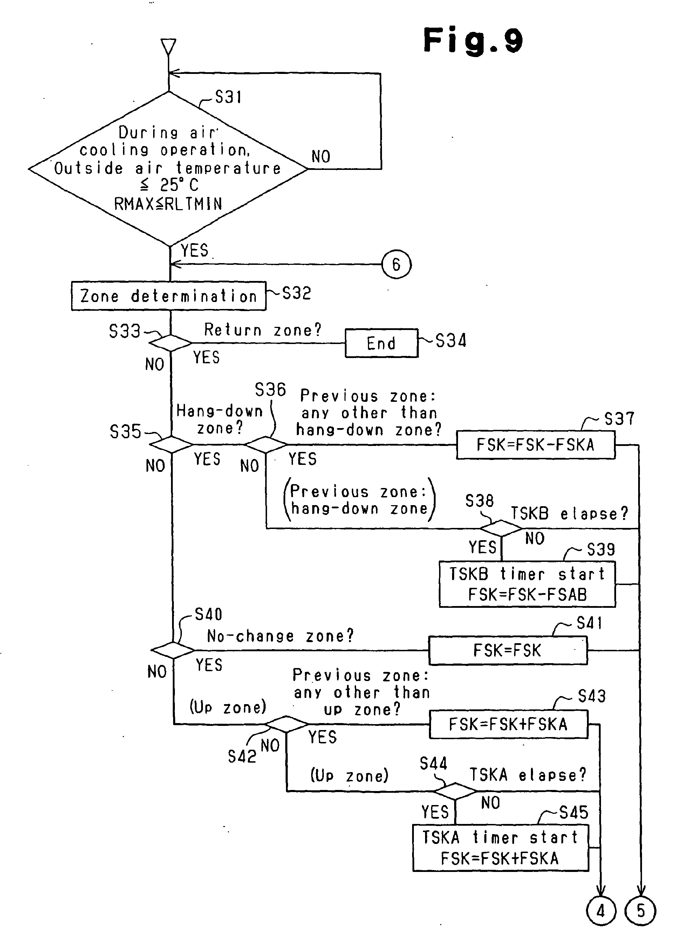

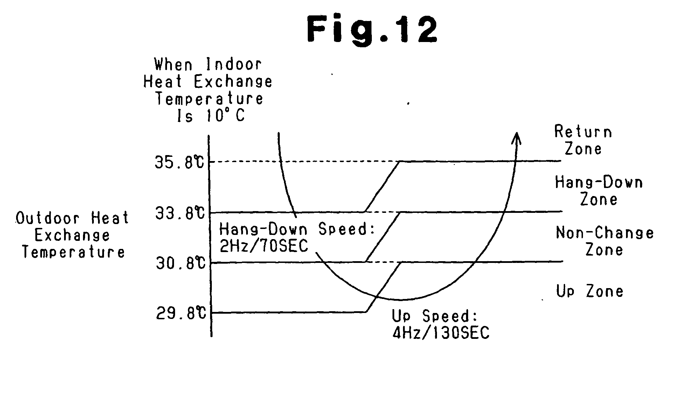

Next, with reference to the flow charts shown in Figures 9 to 11, description will be provided for differential pressure control by the second differential pressure adjustment device 37. Also, in the description based on these flow charts, Figure 12 will be used together as an auxiliary explanatory drawing. Figure 12 is a zone view in the second differential pressure adjustment device 37.

When the high/low pressure difference of the compressor 11 is still at the predetermined level or less, even by the differential pressure control by the first differential pressure adjustment device 36, the second differential pressure adjustment device 37 provides control to prevent the high/low pressure difference from decreasing by increasing the operation frequency of the compressor 11. For this reason, by observing each time a predetermined time period elapses, which of predetermined zones (return zone, hang-down zone, non-change zone and up zone) an outdoor heat exchange temperature is in, and which of the zones the outdoor heat exchange temperature was previously in, a lower limit operation frequency FSK for the compressor 11 will be set. Thus, the actual operation frequency is controlled in such a manner that the compressor 11 is regulated by the lower limit operation frequency FSK thus set. These zones are to be set on the basis of the experimental results so as to allow such determination to be performed, and are set so as to become predetermined values corresponding to changes in the indoor heat exchange temperature. Also, the zone view of Figure 12 is drawn for a case where the indoor heat exchange temperature is 10°C as an example. In this respect, when the rotation speed of the compressor 11 increases by increasing the lower limit operation frequency FSK of the compressor 11, the capacity of the compressor 11 will be increased to make the high/low pressure difference larger.

When the outside air temperature is 25°C or less, and the upper limit operation rotation speed RMAX of the outdoor fan 12a in the above-described first differential pressure adjustment device 36 is the lower limit rotation speed RLTMIN to be allowed for the outdoor fan 12a or less (See Step S27), the differential pressure control by the second differential pressure adjustment device 37 is performed (Step S31 of Figure 9).

When this condition is satisfied, zone determination is performed (Step S32).

Determination as to, in which zone the outdoor heat exchange temperature is located, is performed in Steps S33, S35 and S40.

In Step S33, when the outdoor heat exchange temperature has been determined to be located in the return zone, the outdoor heat exchange temperature is high, in other words, it is determined that the high pressure is high and the high/low pressure difference of the compressor 11 is sufficient, and this control is completed (Step S34).

Also, in Step S35, when the outdoor heat exchange temperature has been determined to be located in the hang-down zone, the previous zone is determined (Step S36). Determining the previous zone means to enable to determine whether the outdoor heat exchange temperature is decreasing or rising or stable. Thus, in response to this determination, the lower limit operation frequency FSK of the compressor 11 stored will be controlled to be rewritten.

When the previous zone is any other than the hang-down zone (YES in Step S36), since the outdoor heat exchange temperature is high and the high/low pressure difference is a predetermined level or higher, as the edge processing, the lower limit operation frequency FSK will be reduced by a fixed frequency FSKA (for example, 2 Hz)(Step S37).

When the previous zone is the hang-down zone (NO in Step S36), since the outdoor heat exchange temperature is high and the high/low pressure difference is a predetermined level or higher, and yet it is determined that the outdoor heat exchange temperature is not decreasing, a timer TSKB is started, and during a predetermined time period before the time is up, the lower limit operation frequency FSK will be reduced by a fixed frequency FSAB (2 Hz) every time a fixed time period elapses (20 seconds in this example) (Step S38, S39).

Next, in Step S40, when the outdoor heat exchange temperature has been determined to be located in the non-change zone (YES in Step S40), since the outdoor heat exchange temperature is located at a predetermined level height, the lower limit operation frequency FSK will be maintained as it is (Step S41).

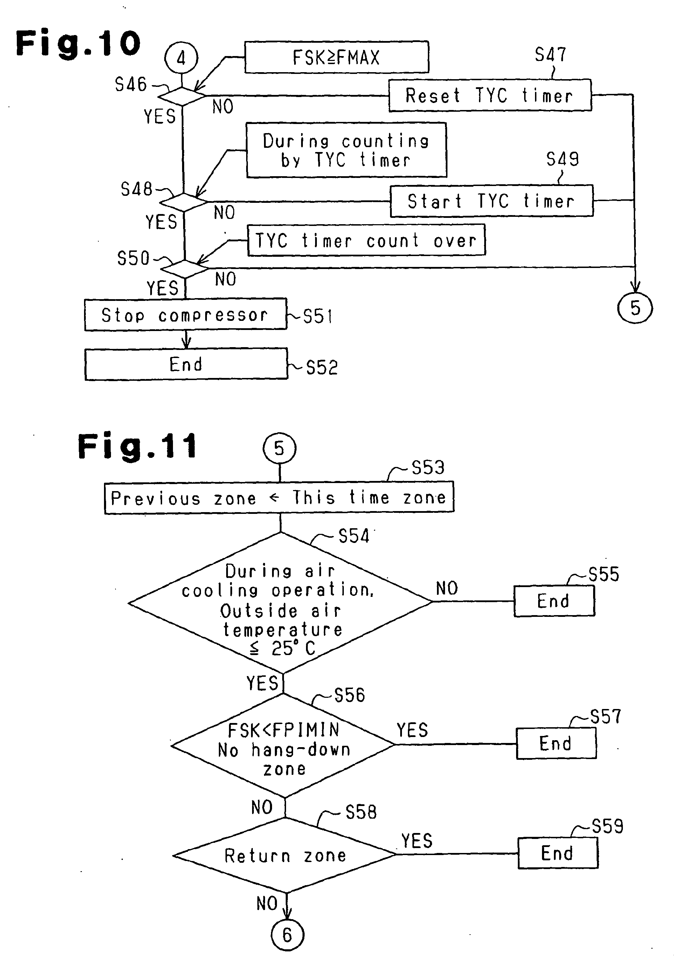

When the outdoor heat exchange temperature is located in the non-change zone from the return zone as described above, after processing as described in Step S35 to Step 41, the previous zone stored will be changed into the zone determined at this time (Step S53 of Figure 11). Thus, when the outside air temperature exceeds 25°C, or when the outdoor heat exchange temperature had been located in the return zone, since there is no need for regulating the lower limit operation frequency FSK of the compressor 11, this differential pressure control is completed (Step S54 → S55, Step 558 → S59). Also, when the outdoor heat exchange temperature is located in any other than the hang-down zone and the lower limit operation frequency FSK stored becomes the minimum allowable frequency of the compressor 11 or less, this differential pressure control is completed because the compressor 11 cannot be operated (Step 556 → S57). In this respect, when the above-described patterns cannot be applied, in order to continue the differential pressure control, the sequence will return to the zone determination in Step S32.

On the other hand, when the outdoor heat exchange temperature has been determined to be located in the up zone (that is, when determined to be NO in Step S40), it is determined how the previous zone has been. When the previous zone has been any other than the up zone (that is, non-change zone), it is determined that the outdoor heat exchange temperature has become the predetermined level or less, and first as the edge processing, the lower limit operation frequency FSK will be increased by a fixed frequency FSKA (for example, 2 Hz).

Also, when the previous zone was located in the up zone, it is determined that the outdoor heat exchange temperature is still the predetermined level or less, a timer TSKA is started, and during a predetermined time period before the time is up, control will be performed to raise the outdoor heat exchange temperature, that is, to increase the high/low pressure difference by increasing the operation frequency by a fixed frequency FSKA (for example, 2 Hz) at a time every a fixed time period (for example, 130 seconds)(Steps S44, S45).

Thus, after this processing is over, before shifting to Step 553, it is determined whether or not the lower limit operation frequency FSK exceeds the maximum frequency (upper limit frequency) FMAX to be allowed for the compressor 11 (Step S46). When the lower limit operation frequency FSK does not exceed the upper limit frequency FMAX, a timer TYC will be reset (Step S47) to shift to Step S53. Subsequently, when the timer TYC is not started, but the lower limit operation frequency FSK exceeds the upper limit frequency FMAX (No in Step S48), the timer TYC will be started (Step S49). Also, when the lower limit operation frequency FSK still exceeds the upper limit frequency FMAX during a stage in which the time of the timer TYC has been up (YES in Step S50), the operation of the compressor 11 will be stopped (Step S51) to complete this differential pressure control (Step S52).

The second differential pressure adjustment device 37 is a device for controlling the rotation speed of the compressor 11 by changing the preset value of the lower limit operation frequency FSK of the compressor 11 in order to prevent the high/low pressure difference of the compressor 11 from decreasing as described above to change the operation frequency of the compressor 11. Also, processing by the Steps S46 to S52 constitutes a device for regulating an upper limit of the compressor operation frequency according to the present invention.

Next, in the air conditioner according to the present embodiment, as described above, radiating fins for dissipating heat generated by electronic parts are provided for the control board 34, and the structure is arranged such that part of the outside air to be supplied to the outdoor heat exchanger 12 is supplied to these radiating fins. However, when the rotation speed of the outdoor fan 12a is reduced by the first differential pressure adjustment device 36, particularly when the outside air temperature is not so low, there is a supposed case where the amount of heat dissipation from the radiating fins could not be held within the predetermined amount. In this case, the electronic parts may overheat. Thus, in the present embodiment, when the temperature of the radiating fins exceeds the predetermined temperature, there is provided an electrical equipment protection device 38 for reducing an amount of heat that must be dissipated by judging that the heat dissipation capacity of the radiating fins would be insufficient.

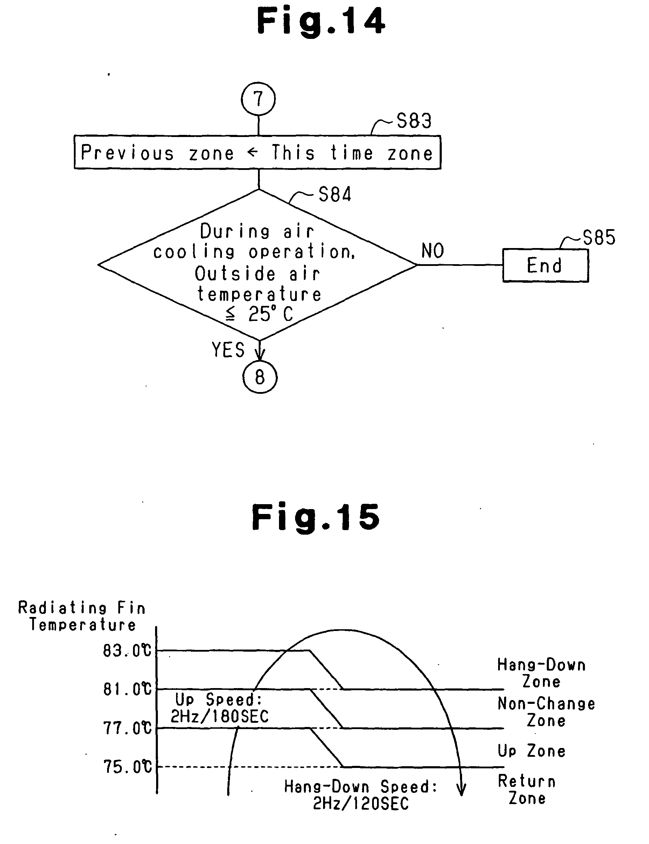

When the radiating fin temperature has risen to the predetermined value, the electrical equipment protection device 38 reduces the operation frequency of the compressor 11 to reduce an amount of heat dissipation from the electronic parts for preventing the radiating fin temperature from rising. For this reason, at the low outside air temperature at which the first differential pressure adjustment device 36 operates, on the basis of, which of predetermined zones (hang-down zone, non-change zone, up zone and return zone) a radiating fin temperature is in, and which of the zones the radiating fin temperature was previously in, an upper limit operation frequency FFIN of the compressor 11 will be set. Thus, the actual operation frequency is controlled in such a manner that the compressor 11 is regulated by the upper limit operation frequency FFIN thus set. Also, the operation frequency control of the compressor 11 by this electrical equipment protection device 38 has precedence over operation frequency control of the compressor 11 by the second differential pressure adjustment device 37. In this respect, the above-described radiating fin temperature zones are determined on the basis of the experimental data relating to the differential pressure control by the first differential pressure adjustment device 36 so as to enable the above-described determination to be applied. Figure 15 is a zone view for radiating fin temperature showing its one example.

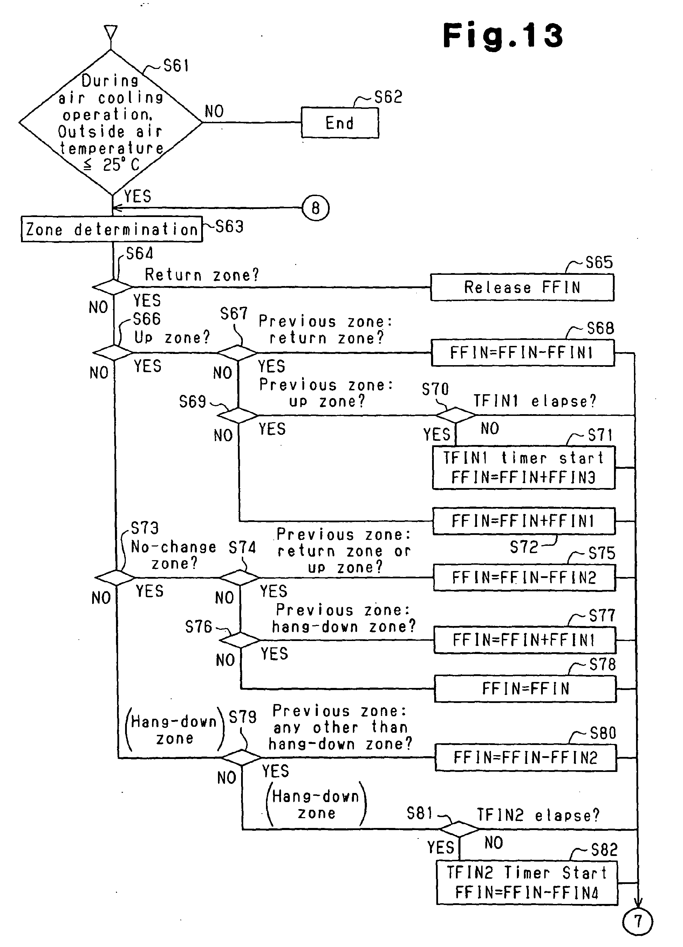

Hereinafter, with reference to the flow charts shown in Figures 13 and 14, the description will be made of amount of heat dissipation control by this electrical equipment protection device 38. Also, in the description based on these flow charts, Figure 15 will be used together as an auxiliary explanatory drawing.

The amount of heat dissipation control by this electrical equipment protection device 38 is performed when the outside air temperature is 25°C or less, that is, when the differential pressure control by the first differential pressure adjustment device 36 is performed (Step S61). When the outside air temperature exceeds 25°C, the differential pressure control by the first differential pressure adjustment device 36 is not performed, and therefore, there is no need for performing this amount of heat dissipation control, but it is stopped (Step S62).

Next, concerning in which zone the radiating fin temperature is located, zone determination is performed (Step S63).

Determination as to, in which zone the radiating fin temperature is located, is performed in Steps S64, S66 and S73.

In Step S64, when the radiating fin temperature has been determined to be located in the return zone (YES in Step S64), since the radiating fin temperature is low and there is no need for this amount of heat dissipation control by the electrical equipment protection device 38, it is released (Step S65).

Also, in Step S66, when the radiating fin temperature has been determined to be located in the up zone (YES in Step S66), the previous zone will be determined.

When the previous zone is the return zone, it can be seen that the radiating fin temperature is low, but is rising. For this reason, as edge processing implying that temperature rise is prevented as a preliminary step, the upper limit operation frequency FFIN of the operation frequency of the compressor 11 will be reduced by a fixed frequency FFIN1 (for example, 2 Hz) (Step S68).

When the previous zone is the up zone (YES in Step S69) since it is determined that the radiating fin temperature is low, and is not rising, a timer TFINI is started, and during a predetermined time period before the time is up, the upper limit operation frequency FFIN stored will be raised by a fixed frequency FFINI (for example, 2 Hz) every time a fixed time period elapses (180 seconds in this example), to be rewritten (Step S70, S71).

When the previous zone is neither the up zone nor the return zone, specifically in the case of the no-change zone (NO in Step S67), since the radiating fin temperature has lowered, the upper limit operation frequency FFIN stored as the edge processing will be increased by a fixed frequency FFIN1 (for example, 2 Hz)(Step S72).

Next, in Step S73, when the radiating fin temperature has been determined to be the no-change zone, the previous zone will be determined as in the case of Step S66.

When the previous zone is either the return zone or the up zone (specifically, the up zone, YES in Step S67), it can be seen that the radiating fin temperature is rising although it is at a predetermined temperature level. For this reason, as edge processing implying that a rise in the radiating fin temperature is prevented as a preliminary step, the upper limit operation frequency FFIN stored will be reduced by a fixed frequency FFIN2 (for example, 2 Hz) (Step S75).

Also, when the previous zone is the hang-down zone (YES in Step S76), since it is determined that the radiating fin temperature has lowered to a predetermined level, as the edge processing, the upper limit operation frequency FFIN will be raised by a fixed frequency FFIN1 (for example, 2 Hz)(Step S77).

Also, when the previous zone is neither the return zone, nor the up zone, not the hang-down zone (NO in the Step S76, that is, in the case of the no-change zone), since the radiating fin temperature is in a state in which the predetermined level has been held, the upper limit operation frequency FFIN stored will be continued as it is (Step S78).

Next, in Step S73, when the radiating fin temperature has been determined to be NO, that is, when it has been determined to be the hang-down zone, the previous zone will be determined as in the case of the above-described one.

When the previous zone is any other than the hang-down zone, specifically in the case of the non-change zone (YES in Step S79), since it is determined that the radiating fin temperature has entered a state higher than the predetermined level, as edge processing implying that a rise in the radiating fin temperature is prevented, the upper limit operation frequency FFIN stored will be reduced by a fixed frequency FFIN2 (for example, 2 Hz) (Step S80).

Also, when the previous zone is the hang-down zone (NO in Step S79), it is concluded that the radiating fin temperature has continued to be in a state higher than the predetermined level. Thus, a timer TFIN2 is started, and during a predetermined time period before the time is up, the upper limit operation frequency FFIN stored will be reduced by a fixed frequency FFIN4 (2 Hz in this example) every time a fixed time period elapses (120 seconds in this example) (Step S81, S82).

In the next Step S83 in which such processing as described above has been completed, the contents that have been stored as the previous zone will be re-written to the zone determined this time. Subsequently, it is confirmed that the outside air temperature has not exceeded 25°C (Step S84) and the sequence will return to Step S63.

Control of an amount of heat dissipation by the electrical equipment protection device 38 controls an actual operation frequency of the compressor 11 by controlling the upper limit operation frequency FFIN of the compressor 11 during an operation in preference to the differential pressure control by the second differential pressure adjustment device 37 in order to prevent the radiating fin temperature from rising, that is, to prevent the electronic parts from burning as described above. In this respect, such an electrical equipment protection device 38 is a so-called second electrical equipment protection device in the present invention.

In this respect, in place of the above-described electrical equipment protection device 38, when the radiating fin temperature has risen, it may be possible to control increase of the rotation speed of the outdoor fan 12a by increasing the lower limit operation rotation speed of the outdoor fan 12a instead of reducing the operation frequency of the compressor 11 as described above. As regards the specific method, description of the details is omitted, but the structure can be arranged in accordance with the contents of the control by the electrical equipment protection device 38. In this respect, such an electrical equipment protection device is the so-called first electrical equipment protection device in the present invention.

Since it has been constructed as described above, the present invention can exhibit the following effects.

Accordingly to the present invention, there are provided the first differential pressure adjustment device 36 for adjusting, when it can be determined that the high/low pressure difference of the compressor 11 during an air cooling operation at a predetermined outside air temperature or less has decreased to the predetermined value, so as to prevent the high/low pressure difference of the compressor 11 from decreasing by reducing the rotation speed of the outside fan 12a, and the second differential pressure adjustment device 37 for adjusting, when during an air cooling operation at a predetermined outside air temperature or less, in the control of high/low pressure difference by the first differential pressure adjustment device 36, it can be determined that the high/low pressure difference cannot be held at a predetermined value or higher, so as to prevent the high/low pressure difference of the compressor 11 from decreasing by increasing the operation frequency of the compressor 11. Therefore, it is possible to hold the high/low pressure difference of the compressor 11 at a predetermined value or higher in an air cooling operation at low outside air temperature. Also, since there is no need for the refrigerant circuit equipment and control equipment required for control of an amount of refrigerant which has conventionally been a factor for raising the cost, it is possible to provide an air conditioner equipped with a low-cost differential pressure adjustment device.

Also, since the first differential pressure adjustment device 36 has a device for regulating a lower limit of the fan rotation speed for holding the rotation speed of the outdoor fan 12a at a lower limit rotation speed or higher, the outdoor fan 12a is not operated at an allowable operation rotation speed or less, but the electronic parts of the fan driving circuit are protected and the rotation speed of the outdoor fan 12a is reliably controlled.

Also, since the second differential pressure adjustment device 37 has a device for regulating the upper limit of the compressor operation frequency for holding the operation frequency of the compressor 11 at an upper limit frequency of the allowable operating range or less, electronic parts for constituting the invertor circuit are protected and mechanical damage to the compressor 11 is prevented.

Also, the first differential pressure adjustment device 36 distinguishes, every time a predetermined time period elapses, which of predetermined zones an outdoor heat exchange temperature is in, and which of the zones the outdoor heat exchange temperature was previously in, and on the basis of this distinguishment result, determines whether or not the high/low pressure difference of the compressor 11 can be held at the predetermined value or higher. When it is determined that it may not be held, the upper limit operation rotation speed FMAX of the outdoor fan 12a is controlled to be decreased by a predetermined rotation speed. Therefore, by determining by a simple method whether or not the high/low pressure difference can be held, the rotation speed of the outdoor fan 12a can be controlled. In this respect, in the control of the high/low pressure difference by this first differential pressure adjustment device 36, since an initial preset value of the upper limit operation rotation speed FMAX of the outdoor fan 12a has been determined corresponding to the outside air temperature, the rise time up to stable operation can be shortened.

Also, the second differential pressure adjustment device 37 distinguishes, every time a predetermined time period elapses, which of predetermined zones an outdoor heat exchange temperature is in, and which of the zones the outdoor heat exchange temperature was previously in, and on the basis of this distinguishment result, determines whether or not the high/low pressure difference of the compressor 11 can be held at the predetermined value or higher. When it is determined that it may not be held, the lower limit operation frequency FSK of the compressor 11 is controlled to be increased by a predetermined frequency. Therefore, by determining by a simple method whether or not the high/low pressure difference can be held, the operation frequency of the compressor 11 can be controlled.

Also, in the differential pressure control by the above-described first differential pressure adjustment device 36 and second differential pressure adjustment device 37, since the zones of outdoor heat exchange temperatures have been set to predetermined values corresponding to changes in the indoor heat exchange temperature, it can be determined whether or not the high/low pressure difference can be held more accurately.

Also, in the differential pressure control by the first differential pressure adjustment device 36 and second differential pressure adjustment device 37, since outdoor heat exchange temperature is detected by an outdoor heat exchange temperature detector for detecting intermediate temperature of an outdoor heat exchanger, and further the above-described indoor heat exchange temperature is detected by an indoor heat exchange temperature detector for detecting temperature of the indoor heat exchanger, the outdoor heat exchange temperature and temperature of the indoor heat exchanger, that constitute a basis for determining the high/low pressure difference, can be detected by an ordinary temperature detector.

Also, in the air conditioner, a control board 34, in which electronic parts as control equipment for controlling operation of the air conditioner have been housed, is provided with radiating fins for dissipating heat to be generated by the electronic parts within the control board 34, and the control board is provided with an electrical equipment protection device 38(first electrical equipment protection device) for increasing the rotation speed of the outdoor fan 12a in preference to the first differential pressure adjustment device 36 in such a manner that temperature of these radiating fins becomes a predetermined value or less. Therefore, it is possible to reliably supply a minimum amount of outside air for cooling, necessary for cooling of the electronic parts to the radiating fins.

Also, the control board 34, in which electronic parts as control equipment for controlling operation of the air conditioner have been housed, is provided with radiating fins for dissipating heat to be generated by the electronic parts within the control board 34, and the control board is provided with the second electrical equipment protection device for reducing the operation frequency of the compressor 11 in preference to the second differential pressure adjustment device 37 in such a manner that temperature of these radiating fins becomes a predetermined value or less. Therefore, it is possible to reliably supply a minimum amount of outside air for cooling, necessary for cooling of the electronic parts to the radiating fins.

### Industrial Applicability

As described above, an air conditioner according to the present invention is useful for cooling buildings having lighting fixtures, electronic equipment and the like with high heat release value.

## Claims

1. An air conditioner, comprising:
a refrigerant circuit formed by connecting at least an inverter-driven compressor (11), an outdoor heat exchanger (12) for heat-exchange with outside air, an expansion device (13), and an indoor heat exchanger (21) to each other;
an outdoor fan (12a) for supplying the outside air to the outdoor heat exchanger, the rotation speed of the outdoor fan being controllable; a control board (34) comprising:
a first differential pressure adjustment device (36) configured to reduce the rotation speed of the outdoor fan when a high/low pressure difference decreases to a predetermined pressure difference during an air cooling operation with the outside air temperature being a predetermined temperature or less to prevent said high/low pressure difference from decreasing; **characterized in that** the control board further comprises:
a second differential pressure adjustment device (37) configured to increase operation frequency of the compressor when said high/low pressure difference cannot be held at a predetermined value or higher by the first differential pressure adjustment device during the air cooling operation with the outside air temperature being at the predetermined temperature or less to prevent said high/low pressure difference from decreasing.

2. The air conditioner according to Claim 1, **characterized in that** said first differential pressure adjustment device (36) has a device for regulating a lower limit of the fan rotation speed for holding the rotation speed of the outdoor fan at a lower limit rotation speed of an allowable operation range or higher.

3. The air conditioner according to Claim 1, **characterized in that** said first differential pressure adjustment device (36) is configured to distinguish, every time a predetermined time period elapses, which of predetermined zones an outdoor heat exchange temperature is in, and which of the zones the outdoor heat exchange temperature was previously in; on the basis of this distinguishment result, the first differential pressure adjustment device is configured to determine whether or not the high/low pressure difference of the compressor can be held at the predetermined value or higher; and when it is determined that it may not be held, the first differential pressure adjustment device is configured to decrease an upper limit operation rotation speed of the outdoor fan by a predetermined rotation speed.

4. The air conditioner according to Claim 3, **characterized in that** the zones of said outdoor heat exchange temperatures are set to predetermined values corresponding to a change in indoor heat exchange temperature.

5. The air conditioner according to Claim 3, **characterized in that** said outdoor heat exchange temperature is a temperature to be detected by an outdoor heat exchange temperature detector for detecting an intermediate temperature of the outdoor heat exchanger (12).

6. The air conditioner according to Claim 4, **characterized in that** said indoor heat exchange temperature is a temperature to be detected by an indoor heat exchange temperature detector (32) for detecting temperature of the indoor heat exchanger (21).

7. The air conditioner according to Claim 4, **characterized in that** an initial preset value for the upper limit operation rotation speed of said outdoor fan is, in the high/low pressure difference control in said first differential pressure adjustment device, determined corresponding to the outside air temperature.

8. The air conditioner according to Claim 1, **characterized in that** said second differential pressure adjustment device (32) has a device for regulating an upper limit of a compressor operation frequency for holding the operation frequency of the compressor (11) at an upper limit frequency of the allowable operation range or less.

9. The air conditioner according to Claim 1, **characterized in that** said second differential pressure adjustment device (37) is configured to distinguish, every time a predetermined time period elapses, which of predetermined zones an outdoor heat exchange temperature is in, and which of the zones the outdoor heat exchange temperature was previously in; on the basis of this distinguishment result, the second differential pressure adjustment device is configured to determine whether or not the high/low pressure difference of the compressor (11) can be held at the predetermined value or higher; and when it is determined that it may not be held, the second differential pressure adjustment device is configured to raise a lower limit operation frequency of the compressor by a predetermined frequency.

10. The air conditioner according to Claim 9, **characterized in that** the zones of said outdoor heat exchange temperatures are set to predetermined values corresponding to changes in the indoor heat exchange temperature.

11. The air conditioner according to Claim 9, **characterized in that** said outdoor heat exchange temperature is a temperature to be detected by an outdoor heat exchange temperature detector (31) for detecting an intermediate temperature of an outdoor heat exchanger.

12. The air conditioner according to Claim 10, **characterized in that** said indoor heat exchange temperature is a temperature to be detected by an indoor heat exchange temperature detector (33) for detecting temperature of the indoor heat exchanger.

13. The air conditioner according to any one of Claims 1 to 12, **characterized by**
a radiating fin provided on the control board (34) for dissipating heat to be generated by electronic parts within this control board; and
a first electrical equipment protection device (38) for raising the rotation speed of said outdoor fan (12a) in preference to said first differential pressure adjustment device (36) in such a manner that temperature of the radiating fin becomes a predetermined value or less.

14. The air conditioner according to any one of Claims 1 to 12, **characterized by**
a radiating fin provided on the control board (34) so as to dissipate heat to be generated by electronic parts within this control board; and
a second electrical equipment protection device (38) for reducing the operation frequency of said compressor (11) in preference to said second differential pressure adjustment (37) device in such a manner that temperature of the radiating fin becomes a predetermined value or less.

## Patentansprüche

1. Klimaanlage, umfassend:
einen Kühlmittelkreis, der durch miteinander Verbinden von zumindest einem Inverter-angetriebenen Verdichter (11), einem Außenwärmetauscher (12) für einen Wärmetausch mit einer Außenluft, eine Expansionsvorrichtung (13) und einem Innenwärmetauscher (21) ausgebildet wird,
einen Außenlüfter (12a) zum Zuführen der Außenluft zum Außenwärmetauscher, wobei die Drehgeschwindigkeit des Außenlüfters steuerbar ist,
ein Steuerpaneel (34), umfassend:
eine erste Differenzdruckeinstellungsvorrichtung (36), welche die Drehgeschwindigkeit des Außenlüfters reduzieren kann, wenn eine hohe/niedrige Druckdifferenz während eines Luftkühlbetriebs auf eine vorbestimmte Druckdifferenz abnimmt, wobei die Außenlufttemperatur eine vorbestimmte Temperatur oder weniger ist, damit die hohe/niedrige Druckdifferenz am Abnehmen gehindert wird, **dadurch gekennzeichnet, dass** das Steuerpaneel weiter umfasst:
eine zweite Differenzdruckeinstellungsvorrichtung (37), die eine Betriebsfrequenz des Verdichters erhöhen kann, wenn die hohe/niedrige Druckdifferenz während des Luftkühlbetriebs durch die erste Differenzdruckeinstellungsvorrichtung nicht auf einem vorbestimmten Wert oder höher gehalten werden kann, wobei die Außenlufttemperatur auf der vorbestimmten Temperatur oder weniger liegt, damit die hohe/niedrige Druckdifferenz am Abnehmen gehindert wird.

2. Klimaanlage gemäß Anspruch 1, **dadurch gekennzeichnet, dass** das die erste Differenzdruckeinstellungsvorrichtung (36) eine Vorrichtung zum Regulieren einer unteren Grenze der Lüfterdrehgeschwindigkeit aufweist, um die Drehgeschwindigkeit des Außenlüfters auf einer niedrigen Grenzdrehgeschwindigkeit eines gewährbaren Betriebsbereichs oder höher zu halten.

3. Klimaanlage gemäß Anspruch 1, **dadurch gekennzeichnet, dass** die erste Differenzdruckeinstellungsvorrichtung (36) jedes Mal, wenn eine vorbestimmte Zeitperiode abläuft, unterscheiden kann, welche der vorbestimmten Zonen einer Außenwärmetauschtemperatur innen ist, und welche der Zonen der Außenwärmetauschtemperatur zuvor innen war, wobei auf der Basis dieses Unterscheidungsergebnisses die erste Differenzdruckeinstellungsvorrichtung bestimmen kann, ob die hohe/niedrige Druckdifferenz des Verdichters auf dem vorbestimmten Wert oder höher gehalten werden kann oder ob nicht, und wenn bestimmt wird, dass sie nicht gehalten werden könnte, die erste Differenzdruckeinstellungsvorrichtung eine obere Grenzbetriebsdrehgeschwindigkeit des Außenlüfters um eine vorbestimmte Drehgeschwindigkeit verringern kann.

4. Klimaanlage gemäß Anspruch 3, **dadurch gekennzeichnet, dass** die Zonen der Außenwärmetauschtemperaturen auf vorbestimmte Werte festgelegt sind, die einer Veränderung der Innenwärmetauschtemperatur entsprechen.

5. Klimaanlage gemäß Anspruch 3, **dadurch gekennzeichnet, dass** die Außenwärmetauschtemperatur eine Temperatur ist, die durch einen Außenwärmetauschtemperaturerfasser zum Erfassen einer Zwischentemperatur des Außenwärmetauschers (12) erfasst wird.

6. Klimaanlage gemäß Anspruch 4, **dadurch gekennzeichnet, dass** die Innenwärmetauschtemperatur eine Temperatur ist, die durch einen Innenwärmetauschtemperaturerfasser (32) zum Erfassen einer Temperatur des Innenwärmetauschers (21) erfasst wird.

7. Klimaanlage gemäß Anspruch 4, **dadurch gekennzeichnet, dass** ein vorgegebener Anfangswert für die obere Grenzbetriebsdrehgeschwindigkeit des Außenlüfters in der hohen/niedrigen Druckdifferenzsteuerung in der ersten Differenzdruckeinstellungsvorrichtung entsprechend der Außenlufttemperatur bestimmt wird.

8. Klimaanlage gemäß Anspruch 1, **dadurch gekennzeichnet, dass** die zweite Differenzdruckeinstellungsvorrichtung (32) eine Vorrichtung zum Regulieren einer oberen Grenze einer Verdichterbetriebsfrequenz aufweist, um die Betriebsfrequenz des Verdichters (11) auf einer oberen Grenzfrequenz des gewährbaren Betriebsbereichs oder weniger zu halten.

9. Klimaanlage gemäß Anspruch 1, **dadurch gekennzeichnet, dass** die zweite Differenzdruckeinstellungsvorrichtung (37) jedes Mal, wenn eine vorbestimmte Zeitperiode abläuft, unterscheiden kann, welche der vorbestimmen Zonen einer Außenwärmetauschtemperatur innen ist, und welche der Zonen der Außenwärmetauschtemperatur zuvor innen war, wobei auf der Basis dieses Unterscheidungsergebnisses die zweite Differenzdruckeinstellungsvorrichtung bestimmen kann, ob die hohe/niedrige Druckdifferenz des Verdichters (11) bei dem vorbestimmten Wert oder höher gehalten werden kann oder ob nicht, und wenn bestimmt wird, dass sie nicht gehalten werden könnte, die zweite Differenzdruckeinstellungsvorrichtung eine niedrigere Grenzbetriebsfrequenz des Verdichters um eine vorbestimmte Frequenz anheben kann.

10. Klimaanlage gemäß Anspruch 9, **dadurch gekennzeichnet, dass** die Zonen der Außenwärmetauschtemperaturen auf vorbestimmte Werte festgelegt werden, die Veränderungen der Innenwärmetauschtemperatur entsprechen.

11. Klimaanlage gemäß Anspruch 9, **dadurch gekennzeichnet, dass** die Außenwärmetauschtemperatur eine Temperatur ist, die durch einen Außenwärmetauschtemperaturerfasser (31) zum Erfassen einer Zwischentemperatur eines Außenwärmetauschers erfasst wird.

12. Klimaanlage gemäß Anspruch 10, **dadurch gekennzeichnet, dass** die Innenwärmetauschtemperatur eine Temperatur ist, die durch einen Innenwärmetauschtemperaturerfasser (33) zum Erfassen einer Temperatur des Innenwärmetauschers erfasst wird.

13. Klimaanlage gemäß einem der Ansprüche 1 bis 12,
**gekennzeichnet durch**
eine sternförmige Rippe, die am Steuerpaneel (34) zum Dissipieren von **durch** elektronische Teile innerhalb dieses Steuerpaneels erzeugter Wärme vorgesehen ist, und
eine erste Elektroausrüstungsschutzvorrichtung (38) zum derartigen Anheben der Drehgeschwindigkeit des Außenlüfters (12a) vorrangig zur ersten Differenzdruckeinstellungsvorrichtung (36), dass eine Temperatur der sternförmigen Rippe ein vorbestimmter Wert oder weniger wird.

14. Klimaanlage gemäß einem der Ansprüche 1 bis 12, **gekennzeichnet durch**
eine sternförmige Rippe, die am Steuerpaneel (34) so vorgesehen ist, dass sie eine **durch** elektronische Teile innerhalb dieses Steuerpaneels zu erzeugende Wärme dissipiert, und
eine zweite Elektroausrüstungsschutzvorrichtung (38) zum derartigen Reduzieren der Betriebsfrequenz des Verdichters (11) vorrangig zur zweiten Differenzdruckeinstellungsvorrichtung (37), dass eine Temperatur der sternförmigen Rippe ein vorbestimmter Wert oder weniger wird.

## Revendications

1. Climatiseur, comprenant :
un circuit de fluide frigorigène formé en reliant au moins un compresseur (11) commandé par un onduleur, un échangeur de chaleur (12) externe pour échanger de la chaleur avec l'air extérieur, un dispositif d'expansion (13), et un échangeur de chaleur (11) interne les uns aux autres ;
un ventilateur externe (12a) pour fournir l'air extérieur à l'échangeur de chaleur externe, la vitesse de rotation du ventilateur externe pouvant être commandée ; un tableau de commande (34) comprenant :
un premier dispositif (36) de réglage de pression différentielle configuré pour réduire la vitesse de rotation du ventilateur externe lorsqu'une différence de pression élevée/faible diminue jusqu'à une différence de pression prédéterminée lors d'une opération de refroidissement d'air avec la température de l'air extérieur étant inférieure ou égale à une température prédéterminée pour empêcher ladite différence de pression élevée/faible de diminuer ; **caractérisé en ce que** le tableau de commande comprend en plus :
un deuxième dispositif (37) de réglage de pression différentielle configuré pour augmenter la fréquence de fonctionnement du compresseur lorsque ladite différence de pression élevée/faible ne peut pas être maintenue à une valeur supérieure ou égale à une valeur prédéterminée par le premier dispositif de réglage de la pression différentielle lors de l'opération de refroidissement d'air avec la température de l'air extérieur étant inférieure ou égale à la température prédéterminée pour empêcher ladite différence de pression élevée/faible de diminuer.

2. Climatiseur selon la revendication 1, **caractérisé en ce que** ledit premier dispositif (36) de réglage de pression différentielle a un dispositif pour réguler une limite inférieure de la vitesse de rotation du ventilateur pour maintenir la vitesse de rotation du ventilateur externe à une vitesse de rotation limite inférieure d'une plage de fonctionnement admissible ou plus.

3. Climatiseur selon la revendication 1, **caractérisé en ce que** ledit premier dispositif (36) de réglage de la pression différentielle est configuré pour distinguer, à chaque fois qu'une période prédéterminée s'écoule, dans quelle zone parmi des zones prédéterminées la température de l'échangeur de chaleur externe se trouve, et dans laquelle des zones se trouvait précédemment la température de l'échangeur de chaleur externe; sur la base de ce résultat de distinction, le premier dispositif de réglage de la pression différentielle est configuré pour déterminer si la différence de pression élevée/faible du compresseur peut être maintenue supérieure ou égale à la valeur prédéterminée ou non ; et lorsqu'on détermine qu'elle ne peut pas y être maintenue, le premier dispositif de réglage de la pression différentielle est configuré pour diminuer une vitesse de rotation de fonctionnement à la limite supérieure du ventilateur externe par une vitesse de rotation prédéterminée.

4. Climatiseur selon la revendication 3, **caractérisé en ce que** les zones desdites températures de l'échangeur de chaleur externe sont établies à des valeurs prédéterminées correspondant à un changement de la température de l'échangeur de chaleur externe.

5. Climatiseur selon la revendication 3, **caractérisé en ce que** ladite température de l'échangeur de chaleur externe est une température à détecter par un détecteur de température de l'échangeur de chaleur externe pour détecter une température intermédiaire de l'échangeur (12) de chaleur externe.

6. Climatiseur selon la revendication 4, **caractérisé en ce que** ladite température de l'échangeur de chaleur interne est une température à détecter par un détecteur (32) de température de l'échangeur de chaleur interne pour détecter la température de l'échangeur (12) de chaleur externe.

7. Climatiseur selon la revendication 4, **caractérisé en ce qu'**une valeur préétablie initiale pour la vitesse de rotation de fonctionnement à la limite supérieure dudit ventilateur externe est, dans la commande de différence de pression élevée/faible dans ledit dispositif de réglage de la pression différentielle, déterminée en fonction de la température de l'air extérieur.

8. Climatiseur selon la revendication 1, **caractérisé en ce que** ledit deuxième dispositif (32) de réglage de la pression différentielle a un dispositif pour réguler une limite supérieure d'une fréquence de fonctionnement du compresseur pour maintenir la fréquence de fonctionnement du compresseur (11) à une fréquence limite supérieure de la plage de fonctionnement admissible ou moins.

9. Climatiseur selon la revendication 1, **caractérisé en ce que** ledit deuxième dispositif (37) de réglage de la pression différentielle est configuré pour distinguer, à chaque fois qu'une période prédéterminée s'écoule, dans quelle zone parmi des zones prédéterminées la température de l'échangeur de chaleur externe se trouve, et dans laquelle des zones se trouvait précédemment la température de l'échangeur de chaleur externe; sur la base de ce résultat de distinction, le deuxième dispositif de réglage de la pression différentielle est configuré pour déterminer si la différence de pression élevée/faible du compresseur (11) peut être maintenue supérieure ou égale à la valeur prédéterminée ou non ; et lorsqu'on détermine qu'elle ne peut pas y être maintenue, le deuxième dispositif de réglage de la pression différentielle est configuré pour augmenter une fréquence de fonctionnement limite inférieure du compresseur par une fréquence prédéterminée.

10. Climatiseur selon la revendication 9, **caractérisé en ce que** les zones desdites températures de l'échangeur de chaleur externe sont établies à des valeurs prédéterminées correspondant à des changements de la température de l'échangeur de chaleur interne.

11. Climatiseur selon la revendication 9, **caractérisé en ce que** ladite température de l'échangeur de chaleur externe est une température à détecter par un détecteur (31) de température de l'échangeur de chaleur externe pour détecter une température intermédiaire d'un échangeur de chaleur externe.

12. Climatiseur selon la revendication 10, **caractérisé en ce que** ladite température de l'échangeur de chaleur interne est une température à détecter par un détecteur (33) de température de l'échangeur de chaleur interne pour détecter la température de l'échangeur de chaleur interne.

13. Climatiseur selon l'une quelconque des revendications 1 à 12, **caractérisé par**
une ailette de radiateur pourvue sur le tableau de commande (34) pour dissiper la chaleur devant être générée par des parties électroniques dans ce tableau de commande ; et
un premier dispositif (38) de protection d'équipement électrique pour augmenter la vitesse de rotation dudit ventilateur externe (12a) de manière préférable audit premier dispositif (36) de réglage de la pression différentielle de sorte qu'une température de l'ailette de radiateur devienne inférieure ou égale à une valeur prédéterminée.

14. Climatiseur selon l'une quelconque des revendications 1 à 12, **caractérisé par**
une ailette de radiateur pourvue sur le tableau de commande (34) de manière à dissiper la chaleur devant être générée par des parties électroniques dans ce tableau de commande ; et
un deuxième dispositif (38) de protection d'équipement électrique pour réduire la fréquence de fonctionnement dudit compresseur (11) de manière préférable audit deuxième dispositif (37) de réglage de la pression différentielle de sorte que la température de l'ailette de radiateur devienne inférieure ou égale à une valeur prédéterminée.
